# EUROPEAN PATENT APPLICATION

(11) **EP 4 717 461 A1**
(43) Date of publication of application: **01.04.2026**
(21) Application number: 25203730.4
(22) Date of filing: 22.09.2025
(51) Int. Cl.: B41J 2/155, B41J 2/21, G06K 15/10

(54) **PRINTING METHOD AND PRINTING SYSTEM**

(30) Priority: 30.09.2024 JP 2024171353
(71) Applicant: Brother Kogyo Kabushiki Kaisha, Nagoya, Aichi 467-8561 (JP)
(72) Inventor: FUJIWARA, Susumu, Nagoya, 467-8562 (JP); MAEDA, Ayaka, Nagoya, 467-8562 (JP)
(74) Representative: J A Kemp LLP

(57) **Abstract**

A printing method includes executing a duplication process so that a left-end nozzle (42L) of a first head (11B) and a right-end nozzle (42R) of a second head (11A) form the same pixel. Even in a case where an amount of overlap between two pixels which are formed by two liquid droplets ejected, respectively, from an end nozzle of one head unit and an end nozzle of the other head unit which are adjacent to each other is not 0 (zero), the printing method is capable of reducing the decrease in image quality due to the amount of overlap which is not 0.

## Description

### TECHNICAL FIELD

The present invention relates to a printing method and a printing system.

### BACKGROUND ART

A known printing apparatus includes an ink-jet head having a plurality of head units, and a conveying mechanism which conveys a recording medium in a conveying direction. The plurality of head units is disposed in a staggered manner. Specifically, the plurality of head units constructs two head unit rows disposed side by side in the conveying direction, and each of the head unit rows extends in a longitudinal direction orthogonal to the conveying direction. In two head units, included in the plurality of head units and adjacent in the longitudinal direction, an end nozzle A of usable nozzles of one head unit and an end nozzle B of usable nozzles of the other head unit are adjacent in the longitudinal direction. Two liquid droplets are ejected, respectively, from the end nozzle A and the end nozzle B to form two adjacent dots. In the known printing apparatus, an amount of overlap between the dot formed by the liquid droplet ejected from the end nozzle A and the dot formed by the liquid droplet ejected from the end nozzle B is assumed to be zero. Further, in the known printing apparatus, the liquid droplet ejected from the end nozzle A and the liquid droplet ejected from the end nozzle B are ejected, respectively, based on multiple image data each of which corresponds to one of mutually different pixels (see, for example, Patent Literature 1).

### Citation list

[Patent Literature] Patent Literature 1: Japanese Patent Application Laid-open No. 2012-196851

### SUMMARY

### Problem to be solved by the invention:

In the above-described known printing apparatus, in a case where the amount of overlap between the dot formed by the liquid droplet ejected from the end nozzle A and the dot formed by the liquid droplet ejected from the end nozzle B is not actually zero, the quality of a printed image is decreased. Further, according to the knowledge of the inventors, such a positional adjustment in the head units to make the amount of overlap between the dot formed by the liquid droplet ejected from the end nozzle A and the dot formed by the liquid droplet ejected from the end nozzle B completely zero is very difficult to perform. In particular, in recent years, demand for high-speed printing has increased, and the number of head units included in one ink-jet head tends to increase, which in turn makes the positional adjustment for all the head units so that the amount of overlap between the dot formed by the liquid droplet ejected from the end nozzle A and the dot formed by the liquid droplet ejected from the end nozzle B is completely zero becomes all the more difficult.

The present invention aims to provide, in a case where a printing apparatus is used to perform printing and even where the amount of overlap between two pixels, which are formed by two liquid droplets ejected from end nozzles of two adjacent head units, respectively, is not zero, a means for reducing the decrease in image quality due to the above-described amount of overlap which is not zero.

### Solution to the problem:

A printing method according to an aspect of the present invention is a printing method for a printing apparatus,
the printing apparatus including:
   a first head bar having a first head and a second head disposed apart from each other in a first direction, and
   a conveyor configured to convey a recording medium in the first direction,
the first head being located upstream of the second head in the first direction,
each of the first head and the second head having a nozzle area in which a plurality of nozzles are aligned at a pitch P along a second direction orthogonal to the first direction, and an end part on one side in the second direction of the nozzle area of the first head and an end part on the other side in the second direction of the nozzle area of the second head overlapping in the second direction,
a plurality of usable nozzles, of the plurality of nozzles of the first head, including a first nozzle located at the end part on the one side in the second direction and a plurality of first usable nozzles other than the first nozzle,
a plurality of usable nozzles, of the plurality of nozzles of the second head, including a second nozzle located at the end part on the other side in the second direction and a plurality of second usable nozzles other than the second nozzle, and
an amount of overlap X between a first pixel formed by a liquid droplet ejected from the first nozzle and a second pixel formed by a liquid droplet ejected from the second nozzle being greater than 0 pixels and less than one pixel,
the printing method including:
   performing printing by repeatedly causing each of the first head and the second head to eject liquid droplets from the plurality of usable nozzles, based on pixel data, while causing the conveyor to convey the recording medium along the first direction; and
   making pixel data for forming the first pixel same as pixel data for forming the second pixel.

In the above-described configuration, the amount of overlap X between the first pixel formed by the liquid droplet ejected from the first nozzle and the second pixel formed by the liquid droplet ejected from the second nozzle is greater than 0 pixels and less than one pixel. This indicates that the first pixel and the second pixel overlap with each other. Further, in the above-described configuration, by making the pixel data for causing the first nozzle to form the first pixel the same as the pixel data for causing the second nozzle to form the second pixel, the first nozzle and the second nozzle cooperate to form one pixel. Accordingly, as compared to such a case where the pixel data for causing the first nozzle to form the first pixel and the pixel data for causing the second nozzle to form the second pixel are different from each other, and the first and second nozzles are caused to form two pixels adjacent to each other and overlapping each other, the image to be formed is less likely to have a size reduced in the left-right direction and the image quality is less likely to decrease.

### BRIEF DESCRIPTION OF DRAWINGS

FIG. 1 is a plan view illustrating the outline of a printing apparatus 1.
FIG. 2 is a schematic diagram illustrating the outline of the printing apparatus 1.
FIG. 3 is a schematic diagram illustrating how heads 11 included in a head group 20 are disposed.
FIG. 4 is a schematic diagram illustrating the inside of a channel unit 40.
FIG. 5 is a schematic diagram illustrating a state that a head 11A and a head 11B are ideally positioned.
FIG. 6 is a schematic diagram illustrating a state that the head 11A and the head 11B are positioned so that the right end of a nozzle area of the head 11A and the left end of a nozzle area of the head 11B overlap each other in the left-right direction.
FIG. 7 is a schematic diagram illustrating a duplication process of the present embodiment.
FIG. 8 is a schematic view illustrating how a formed image changes in cases where the overlap between print areas of two adjacent heads 11 are 0 px, 0.1 px, and 0.9 px, respectively.
FIG. 9 is a schematic diagram illustrating a case where the overlap between the print areas is 0.5 px, and where the ink is ejected from each of a right-end nozzle 42R and a left-end nozzle 42L in an amount corresponding to 100%.
FIG. 10 is a schematic diagram illustrating a case where the overlap between the print areas is 0.5 px, and where the ink is ejected from each of the right-end nozzle 42R and the left-end nozzle 42L in an amount corresponding to 75%.
FIG. 11 is a sequence diagram of printing.
FIG. 12 is a diagram illustrating adjustment using matching of base colors.
FIG. 13 is a schematic diagram illustrating adjustment using a max-min algorithm.

### DESCRIPTION OF THE EMBODIMENT

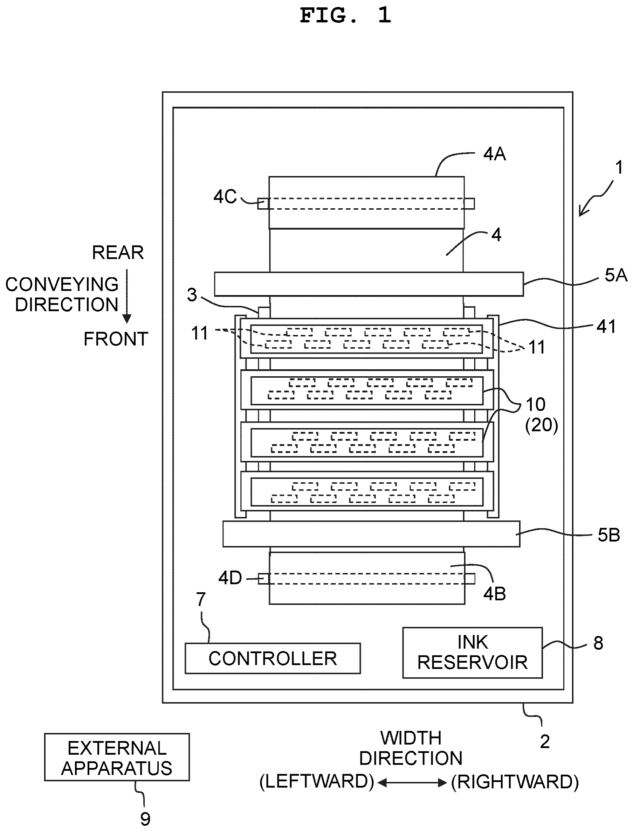

In the following, a printing apparatus 1 according to an embodiment of the present disclosure will be described with reference to the drawings. In FIG. 1, a conveying direction of a recording medium 4 corresponds to the front-rear direction of the printing apparatus 1. Further, a width direction of the recording medium 4 corresponds to the left-right direction of the printing apparatus 1. Furthermore, a direction orthogonal to the front-rear direction and the left-right direction, i.e., a direction perpendicular to the sheet surface of FIG. 1, corresponds to the up-down direction of the printing apparatus 1. The left-right direction is an example of a "second direction" of the present disclosure, and the front-rear direction and the conveying direction are each an example of a "first direction" of the present disclosure.

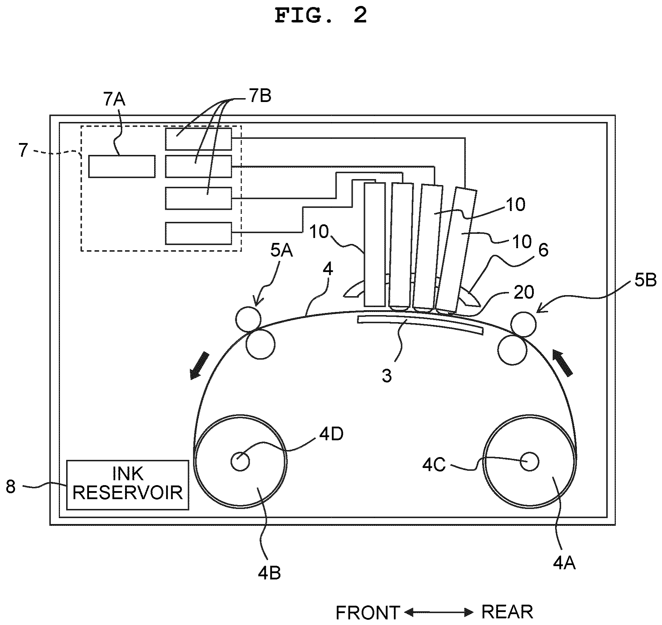

As depicted in FIGs. 1 and 2, the printing apparatus 1 includes a platen 3, four head bars 10, two conveying rollers 5A and 5B, an arch frame 6 (see FIG. 2), a controller 7, four ink reservoirs 8, etc., which are accommodated in the inside of a casing 2. Note that in order to simplify the drawings, only one of the four ink reservoirs 8 is depicted in FIGs. 1 and 2.

As depicted in FIGs. 1 and 2, the recording medium 4 passes over the upper surface of the platen 3. The four head bars 10 are positioned above the platen 3 so as to face the platen 3. An ink is supplied to each of the head bars 10 from a corresponding one of the ink reservoirs 8. The structure of the head bars 10 will be described later. Note that the four head bars 10 are fixed to the arch frame 6 in a state that the head bars 10 are aligned along the front-rear direction (the conveying direction of the recording medium 4). As depicted in FIG. 2, the arch frame 6 has an arch shape, and the four head bars 10 are inclined at mutually different angles with respect to a horizontal plane.

As depicted in FIGs. 1 and 2, the two conveying rollers 5A and 5B are positioned behind and in front of the platen 3, respectively. The two conveying rollers 5A and 5B are driven by a motor (not illustrated). As depicted in FIG. 2, the recording medium 4 is fed from a feeding roll 4A wound in a roll shape and taken up by a winding roll 4B. For example, the recording medium 4 is a roll sheet. Rotating shafts 4C and 4D rotated by a non-illustrated motor are fixed to the feeding roll 4A and the winding roll 4B, respectively. These two rotating shafts 4C and 4D and the two conveying rollers 5A and 5B cooperate to feed the recording medium 4 from the feeding roll 4A, to convey the recording medium 4 downstream in the conveying direction (forward) so that the recording medium 4 passes over the platen 3, and is taken up by the winding roll 4B. The two rotating shafts 4C and 4D and the two conveying rollers 5A and 5B are an example of a "conveyor" of the present disclosure.

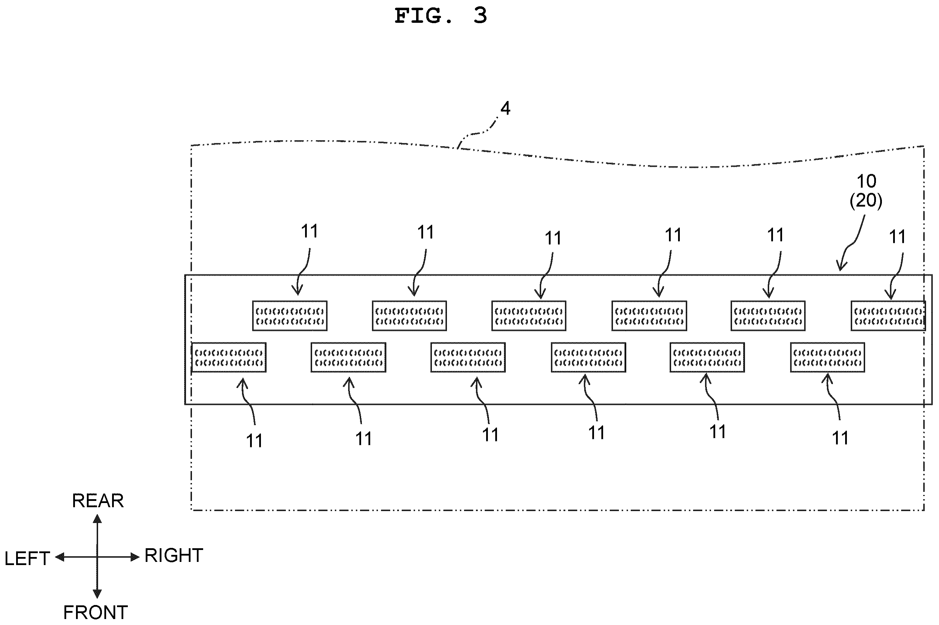

As depicted in FIG. 3, each of the head bars 10 includes a head group 20 having a plurality of heads 11 (e.g., twelve heads 11). Note that in FIG. 1, the number of heads 11 is reduced for the sake of simplifying the drawing. As depicted in FIG. 3, the heads 11 construct two head rows disposed side by side in the front-rear direction. Each of the head rows includes six heads 11 aligned in the left-right direction. The positions in the front-rear direction of the six heads 11 aligned in the left-right direction in one head row are the same. Note that, however, in the following description, the phrase "the positions are the same" does not mean that the positions are the same in a strict sense; rather, the phrase intends to mean that the positions are the same within a manufacturing error and a mounting error. Note that the positions in the left-right direction of the heads 11 included in the two head rows are shifted from one another. In other words, the twelve heads 11 of the head group 20 are positioned in the staggered manner.

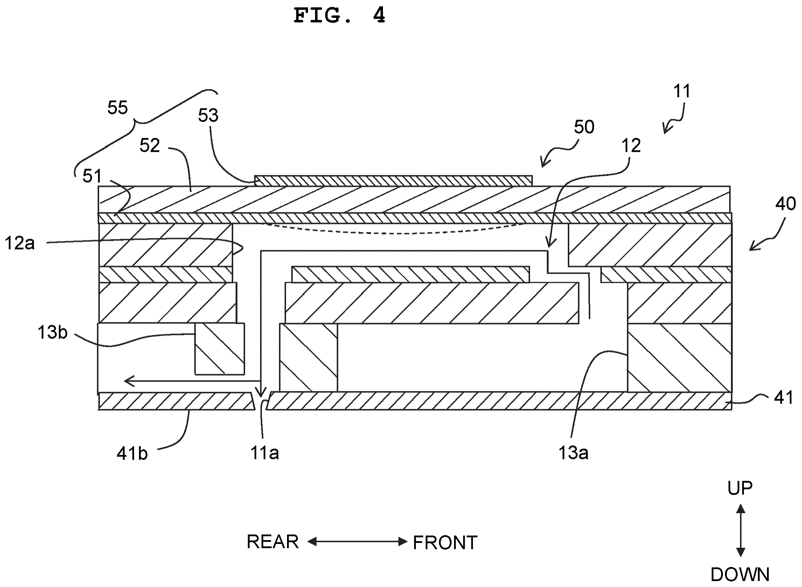

The lower surface of each of the heads 11 is a nozzle surface 41b (see FIG. 4) in which a plurality of nozzles 42 is disposed. In the following description, an area, of the nozzle surface 41b, in which the plurality of nozzles 42 is disposed is referred to as a nozzle area. Further, not all the plurality of nozzles 42 of the head 11 are used for printing, and nozzles among the plurality of nozzles 42 of the head 11 which eject ink and which are used for the printing are referred to as usable nozzles. Note that in the present embodiment, although the head 11 includes the two nozzle rows as depicted in FIG. 3, this configuration is merely an example, and the head 11 may include two or more nozzle rows. Furthermore, in FIG. 3, although the number of nozzles 42 included in each of the nozzle rows is reduced for the sake of simplifying the drawing, the number of nozzles 42 included in each of the nozzle rows may be any number. For example, each of the nozzle rows may include 1000 or more nozzles 42. Note that although an intra-head channel is disposed inside the head 11, the shape and the like of the intra-head channel will be described later.

As described above, the twelve heads 11 of each of the head bars 10 (head group 20) construct the two head rows, and each of the heads 11 has two nozzle rows. A yellow ink is supplied from one of the four ink reservoirs 8 to the twelve heads 11 of a head bar 10 which is positioned at the rearmost (upstream-most in the conveying direction) among the four head bars 10. A magenta ink is supplied from another one of the four ink reservoirs 8 to the twelve heads 11 of a head bar 10 which is positioned second from the rear (second from the upstream in the conveying direction) among the four head bars 10. A cyan ink is supplied from one of the four ink reservoirs 8 to the twelve heads 11 of a head bar 10 which is positioned third from the rear (third from the upstream in the conveying direction) among the four head bars 10. A black ink is supplied from one of the four ink reservoirs 8 to the twelve heads 11 of a head bar 10 which is positioned fourth from the rear (fourth from the upstream in the conveying direction) among the four head bars 10. In such a manner, in the present embodiment, the inks are ejected from the four head bars 10 which are disposed side by side in the conveying direction in an order of a light (pale) color ink to a deep color ink from the upstream toward the downstream in the conveying direction. Note that in the present embodiment, although the printing apparatus 1 has the four head bars 10, the printing apparatus 1 may further have one head bar 10. Further, a white ink may be ejected from this one head bar 10. Note that each of the white ink, the yellow ink, the magenta ink, the cyan ink, and the black ink is, for example, UV curable ink.

Next, a channel unit 40 and an actuator unit 50 constructing each of the heads 11 will be described, with reference to FIGs. 3 and 4. Since the structures of the channel unit 40 and the actuator unit 50 are common to the twelve heads 11, the channel unit 40 and the actuator unit 50 in one head 11 will be described.

As depicted in FIG. 4, the channel unit 40 is constructed of a plurality of metal plates and a nozzle plate 41 stacked in the up-down direction. In the plurality of metal plates, an ink channel such as an individual channel 12 including a pressure chamber 12a, a supply manifold 13a, and a return manifold 13b is constructed by the etching. The nozzle plate 41 is constructed, for example, of a polymeric synthetic resin material such as polyimide, etc., and is joined to the lower surfaces of the stacked metal plates by adhesive. The lower surface of the nozzle plate 41 is the above-described nozzle surface 41b. Note that the nozzle plate 41 may also be constructed of a metal material such as stainless steel, etc.

As depicted in FIG. 4, the individual channel 12 communicating with each of the nozzles 42, and the supply manifold 13a and the return manifold 13b communicating with the individual channel 12 are disposed in the inside of the channel unit 40. Although not depicted in the drawings, the supply manifold 13a and the return manifold 13b extend in the left-right direction (the direction perpendicular to the sheet surface of FIG. 4). The supply manifold 13a is connected to a tank (not depicted) positioned outside the head 11 via an ink supply port (not depicted) disposed in the channel unit 40. The return manifold 13b is connected to the tank 400 positioned outside the head 11 via a non-illustrated ink discharge port disposed in the channel unit 40. This constructs an ink circulation route through which the ink fed from the tank 400 passes through the supply manifold 13a, the individual channel 12, and the return manifold 13b and returns to the tank 400.

Note that although not depicted in the drawings, a plurality of individual channels 12, each of which corresponds to one of nozzles 42, are located so as to construct two individual channel rows extending in the left-right direction, in correspondence to the nozzles 42 which are located so as to construct the two nozzle rows extending in the left-right direction, as described above. Further, twelve supply manifolds 13a and twelve return manifolds 13b are disposed in the channel unit 40; each of the twelve supply manifolds 13a and the twelve return manifolds 13b communicate with individual channels 12, among the plurality of individual channels 12, constructing the two individual channel rows. With this, in the inside of the channel unit 40, a plurality of ink channels is constructed, each of the plurality of ink channels starting from the supply manifold 13a, passing the pressure chamber 12a of one of the plurality of individual channels 12, and reaching one of the nozzles 42 and one of the return manifolds 13b. Note that the number of supply manifolds 13a and the number of return manifolds 13b in the channel unit 40 are adjusted in accordance with the number of nozzles 42. Further, the number of individual channels 12 each communicating with a corresponding one of the supply manifolds 13a and a corresponding one of the return manifolds 13b is also adjusted in accordance with the number of nozzles 42.

As depicted in FIG. 4, the pressure chamber 12a is disposed in each of the individual channels 12, and the actuator unit 50 is disposed at a location above a plurality of pressure chambers 12a each of which belongs to one of the plurality of individual channels 12. The actuator unit 50 includes a vibration plate 51 disposed on the upper surface of the channel unit 40 so as to cover all the pressure chambers 12a of the plurality of individual channels 12, a plurality of piezoelectric bodies 52 each of which is positioned on the upper surface of the vibration plate 51, at a position facing a corresponding one of the pressure chambers 12a, and a plurality of individual electrodes 53 each of which is positioned on the upper surface of a corresponding one of the plurality of piezoelectric bodies 52. As will be described later, the vibration plate 51 functions as a common electrode. The vibration plate 51 as the common electrode, each of the plurality of individual electrodes 53, and each of the plurality of piezoelectric bodies 52 construct one driving element 55. Namely, the actuator unit 50 includes a plurality of driving elements 55 each of which corresponds to one of the plurality of nozzles 42.

The vibration plate 51 is a metallic plate which has a substantially rectangular shape in a plan view, and is made, for example, of an iron-based alloy such as stainless steel, a copper-based alloy, a nickel-based alloy, or a titanium-based alloy, etc. The upper surface of the vibration plate 51 having the electric conductivity is positioned below the plurality of piezoelectric bodies 52. Accordingly, the upper surface of the vibration plate 51 is capable of functioning as the common electrode. The vibration plate 51 as the common electrode is connected to a ground wiring of a non-illustrated driver IC which drives the actuator unit 50, and is held at the ground potential at all times. Note that the vibration plate 51 is not necessarily to be the metallic plate; for example, the vibration plate 51 may be constructed of a piezoelectric material which is the same as the material constructing the plurality of piezoelectric bodies 52, and a metallic film as the common electrode may be formed on the upper surface of the vibration plate 51.

Each of the plurality of piezoelectric bodies 52 is made of a piezoelectric material composed primarily of lead zirconate titanate (PZT) which is a solid solution of lead titanate and lead zirconate and which is a ferroelectric substance. Each of the plurality of piezoelectric bodies 52 is polarized in a thickness direction (up-down direction) at least at an area facing the pressure chamber 12a (an area sandwiched between each of the plurality of individual electrodes 53 and the vibration plate 51). In the present embodiment, although the plurality of piezoelectric bodies 52 are disposed each corresponding to one of the plurality of pressure chambers 12a, the piezoelectric body 52 may be a layer of the piezoelectric body (piezoelectric layer) which is disposed continuously across the plurality of pressure chambers 12a, on the upper surface of the vibration plate 51. In such a case, the vibration plate 51 as the common electrode, each of the plurality of individual electrodes 53 and a part, of the piezoelectric body 52, which is sandwiched between each of the plurality of individual electrodes 53 and the vibration plate 51 construct one driving element 55.

Next, the action of the driving element 55 of the actuator unit 50 at a time of ink ejection will be described. In a case where a predetermined driving potential is applied from the non-illustrated driver IC to a certain individual electrode 53 included in the plurality of individual electrodes 53, a difference in the potential is generated between the certain individual electrode 53 to which the driving potential is applied and the vibration plate 51 as the common electrode and maintained at the ground potential. With this, an electric field in the thickness direction is generated at a certain piezoelectric body 52, of the plurality of piezoelectric bodies 52, which is sandwiched between the certain individual electrode 53 and the vibration plate 51. The direction of the electric field is parallel to the polarization direction of the certain piezoelectric body 52. Accordingly, due to this electric field, an area (active area), of the certain piezoelectric body 52, which faces the certain individual electrode 53 contracts in a plane direction orthogonal to the thickness direction. Here, the vibration plate 51 which is positioned below the certain piezoelectric body 52 is fixed to the channel unit 40. Accordingly, accompanying the active area, of the certain piezoelectric body 52, which is positioned on the upper surface of the vibration plate 51 contracting in the plane direction, a part of the vibration plate 51 which covers a certain pressure chamber 12a, among the plurality of pressure chambers 12a, corresponding to the certain individual electrode 53 is deformed so as to project toward the certain pressure chamber 12a (unimorph deformation, see FIG. 4). In this situation, since the volume inside the certain pressure chamber 12a is reduced, the pressure of the ink inside the certain pressure chamber 12a is increased, thereby ejecting the ink from a nozzle 42, among the nozzles 42, communicating with the certain pressure chamber 12a.

The controller 7 includes a main controller 7A which controls the constituent parts of the printing apparatus 1 except the head bars 10, and a plurality of head controllers 7B which controls the head bars 10 (see FIG. 2). The main controller 7A is connected to an external apparatus 9 such as a PC (see FIG. 1) to be capable of performing data communication with the external apparatus 9, and the main controller 7A controls the constituent parts of the printing apparatus 1 based on print data transmitted from the external apparatus 9. Each of the plurality of head controllers 7B is disposed corresponding to one of the head bars 10. The controller 7 (the main controller 7A and the plurality of head controllers 7B) includes an FPGA (Field Programmable Gate Array), an EEPROM (Electrically Erasable Programmable Read-Only Memory; EEPROM is a registered trademark of Renesas Electronics Corporation), a RAM (Random Access Memory), etc. Note that the controller 7 may include a CPU (Central Processing Unit), or an ASIC (Application Specific Integrated Circuit), etc.

The main controller 7A controls the motor which drives the rotating shafts 4C and 4D and the motor which drives the two conveying rollers 5A and 5B, thereby causing the two conveying rollers 5A and 5B to convey the recording medium 4 in the conveying direction. Further, each of the head controllers 7B controls one of the four head bars 10 so as to eject the ink from the nozzles 42 toward the recording medium 4. In this manner, an image is printed on the recording medium 4.

### Structure of Head Bar 10

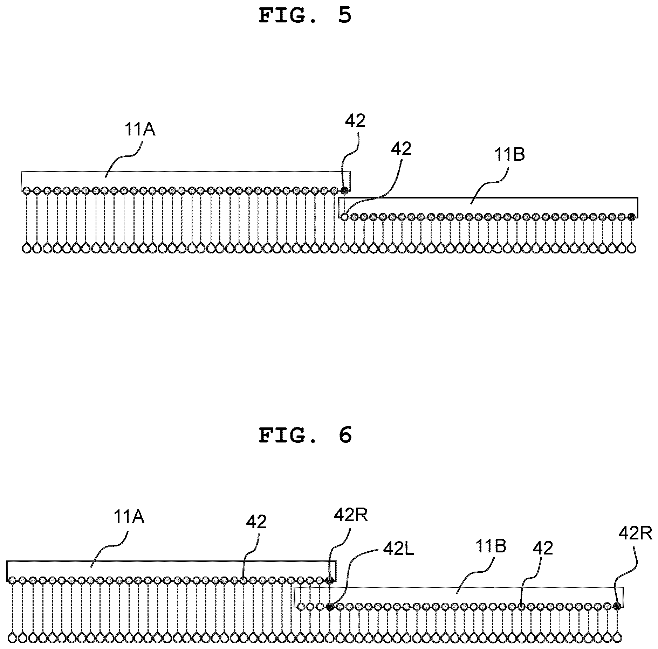

As depicted in FIG. 3, each of the head bars 10 has the plurality of heads 11 disposed in the staggered manner. In the following, focusing on two heads 11 which are included in the plurality of heads 11 and which are adjacent to each other in the left-right direction and disposed at shifted positions in the front-rear direction, one head 11 positioned on the left side is referred to as a head 11A, and the other head 11 positioned on the right side is referred to as a head 11B. As depicted in FIG. 6, a right area positioned at the right end of the nozzle area of the nozzle surface 41b of the head 11A, and a left area positioned at the left end of the nozzle area of the nozzle surface 41b of the head 11B overlap with each other in the left-right direction. Note that in a case where the resolution of each of the heads 11A and 11B is 1200 dpi, the width of 1 pixel (1 px) is 21.16 µm, and a pitch P of the nozzle 42 is also 21.16 µm.

As depicted in FIG. 5, the head 11A and the head 11B are ideally positioned so that, in the left-right direction, a nozzle 42 at the rightmost end of the head 11A (a nozzle indicated by a solid circle in FIG. 5) and a nozzle 42 at the leftmost end of the head 11B (a nozzle indicated by a hollow circle in FIG. 5) are located at the same relative positions. Under the condition that the head 11A and the head 11B can be positioned as described above, usable nozzles of the head 11A and usable nozzles of the head 11B are determined as follows. Note that another head 11 is not present on the left side of the head 11A. In this case, the usable nozzle of the head 11A are all the nozzles 42 of the head 11A. In FIG. 5, nozzles 42 indicated by gray circles and the nozzle 42 indicated by the solid circle correspond to the usable nozzles. With respect to the head 11B, nozzles 42, except the nozzle 42 located leftmost among the nozzles 42 of the head 11B, all become the usable nozzles. In the example depicted in FIG. 5, the nozzles 42 indicated by the gray circles and a nozzle 42 indicated by the solid circle correspond to the usable nozzles. In other words, in the example depicted in FIG. 5, the nozzle 42 located at the leftmost end of the head 11B (the nozzle indicated by the hollow circle in FIG. 5) does not become the usable nozzle, and the other nozzles 42 other than this leftmost nozzle 42 become the usable nozzles. In such a manner, the usable nozzles of the head 11A and the usable nozzles of the head 11B are determined so that the nozzle 42 at the right end of the head 11A becomes the nozzle located rightmost among the usable nozzles of the head 11A, and a nozzle 42 second from the left end of the head 11B becomes the nozzle located leftmost among the usable nozzles of the head 11B. In this case, the distance in the left-right direction between the nozzle 42 located rightmost among the usable nozzles of the head 11A and the nozzle 42 located leftmost among the usable nozzles of the head 11B (the nozzle 42 located second from the left end of the head 11B) is equal to a pitch P. Accordingly, the head 11A and head 11B can be treated as one long head. However, for example, manufacturing errors in the head 11A and the head 11B, and mounting errors of the head 11A and the head 11B to the head bar 10 result in the misalignment of the nozzle 42 at the right end of the head 11A and the nozzle 42 at the left end of the head 11B relative to the left-right direction. Further, even in a case where the head 11A and the head 11B are positioned so that the nozzle 42 at the right end of the head 11A and the nozzle 42 at the left end of the head 11B are at the same relative positions in the left-right direction, the nozzle 42 at the right end of the head 11A and the nozzle 42 at the left end of the head 11B are deviated in the left-right direction, in some cases, due to the manufacturing errors in the head 11A and the head 11B and the mounting errors of the head 11A and the head 11B to the head bar 10. For example, the distance in the left-right direction between the nozzle 42 at the right end of the usable nozzles of the head 11A and the nozzle 42 at the left end of the usable nozzles of the head 11B (the nozzle 42 second from the left end of the head 11B) might become greater than the pitch P. In such a case, the landing position of the ink droplet ejected from the nozzle 42 at the right end of the usable nozzles of the head 11A and the landing position of the ink droplet ejected from the nozzle 42 at the left end of the usable nozzles of the head 11B are separated in the left-right direction, as compared to a case where the nozzle 42 at the right end of the head 11A and the nozzle 42 at the left end of the head 11B are at the same relative positions in the left-right direction. In a case where the landing positions of the ink are separated in the left-right direction, a so-called white streak occurs. A user who sees the printed matter can easily find even a small white streak, which requires the prevention of the occurrence of white streak in an ensured manner.

Therefore, in the present embodiment, the positions of the heads 11A and 11B are adjusted as follows so as to prevent the occurrence of white streak in an ensured manner. Note that the following positional adjustment of the heads is performed by the manufacturer or user of the printing apparatus 1, for example, after the printing apparatus 1 is delivered and installed.

First, the head 11A and the head 11B are positioned so that a part adjacent to the right end of the nozzle area of the nozzle surface 41b of the head 11A and a part adjacent to the left end of the nozzle area of the nozzle surface 41b of the head 11B are made to overlap with each other in the left-right direction, as depicted in FIG. 6. Further, regarding the head 11A, the usable nozzles of the head 11A are determined so that the rightmost nozzle 42 of the head 11A becomes a nozzle at the right end of the usable nozzles (hereinafter referred to as a right-end nozzle 42R) of the head 11A. In FIG. 6, nozzles which are not the usable nozzles are indicated by hollow circles, the right-end nozzle 42R and a left-end nozzle 42L of the usable nozzles are indicated by solid circles, and the other usable nozzles are indicated by gray circles.

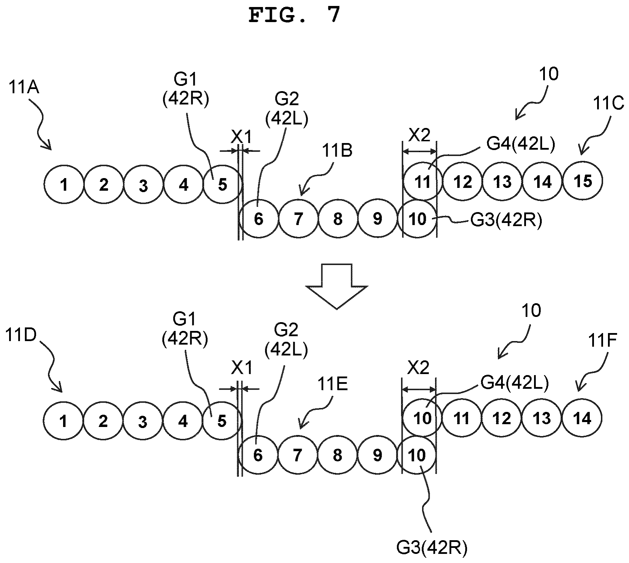

Furthermore, a nozzle at the left end of the usable nozzles (hereinafter referred to as a "left-end nozzle 42L") of the head 11B is determined so that an amount of overlap X1 between a first pixel G 1 formed by the ink ejected from the right-end nozzle 42R of the head 11A and a second pixel G2 formed by the ink ejected from the left-end nozzle 42L of the head 11B is greater than 0 (zero) and smaller than the width of one pixel (1 px) (see FIG. 7). In other words, the left-end nozzle 42L of the head 11B is determined so that the distance in the left-right direction between the landing position of the ink ejected from the right-end nozzle 42R of the head 11A and the landing position of the ink ejected from the left-end nozzle 42L of the head 11B is smaller than the width of one pixel (1 px). Note that as depicted in FIG. 6, the left-end nozzle 42L of the head 11B is not the left-most nozzle of the head 11B, but a nozzle located to the right of the left-most nozzle. In the following description, a combination of the right-end nozzle 42R of the head 11A and the left-end nozzle 42L of the head 11B is referred to as nozzles forming a stitch. The right-end nozzle 42R is an example of a "first nozzle" of the present invention, and the left-end nozzle 42L is an example of a "second nozzle" of the present invention. Note that in the present embodiment, among the plurality of nozzles 42 of the head 11B, not all of the nozzles 42 which overlap with the nozzle area of the head 11A are used for the printing, and nozzles located to the left of the left-end nozzle 42L are not used for the printing. Namely, in a case where the nozzles 42 located to the left of the left-end nozzle 42L are used for the printing, a so-called shingling technique is used so as to form one dot (pixel) with the nozzle 42 of the head 11A and the nozzle 42 of the head 11B cooperating with each other. In order to perform such control, the controller 7 needs to create print data for shingling with respect to each of the nozzles 42 located to the right of the left-end nozzle 42L of the head 11B, which makes the control complicated. In the heads 11A and 11B of the present embodiment, since the nozzles 42 located to the left of the left-end nozzle 42L of the head 11B are not used for the printing, the controller 7 does not need to create such print data for shingling with respect to these nozzles 42.

The three heads 11A, 11B and 11C included in the head bar 10, as depicted in FIG. 7, will be described. The head 11C is a head 11 disposed to the right of the head 11B and at a position shifted from the head 11B in the front-rear direction. Note that the positions in the front-rear direction of the head 11A and the head 11C are the same. Further, a right area located at the right end of the nozzle area of the nozzle surface 41b of the head 11B and a left area located at the left end of the nozzle area of the nozzle surface 41b of the head 11C overlap each other in the left-right direction. Although the shapes of the heads 11A, 11B, and 11C are not directly illustrated in FIG. 7, the positional relationship between the nozzles 42 and the head 11 corresponding to the nozzles 42 is illustrated by the positional relationship of pixels formed, respectively, by the ink droplets ejected from the nozzles 42. Further, to simplify the drawing, the number of pixels formed by the ink droplets ejected from the nozzles 42 of each of the heads 11A to 11C is significantly reduced in the illustration. The positional relationship among these three heads 11A to 11C is assumed to be as follows. The amount of overlap X1 between the first pixel G 1 formed by the right-end nozzle 42R of the head 11A and the second pixel G2 formed by the left-end nozzle 42L of the head 11B is 0.1 px. In other words, in the heads 11A and 11B, the difference in the landing positions of the ink droplets ejected from the two nozzles forming a stitch is 0.9 px. In contrast, an amount of overlap X2 between a third pixel G3 formed by the right-end nozzle 42R of the head 11B and a fourth pixel G4 formed by the left-end nozzle 42L of the head 11C is 0.9 px. In other words, in the heads 11B and 11C, the difference in the landing positions of the ink droplets ejected from the two nozzles forming a stitch (the right-end nozzle 42R and the left-end nozzle 42L) is 0.1 px.

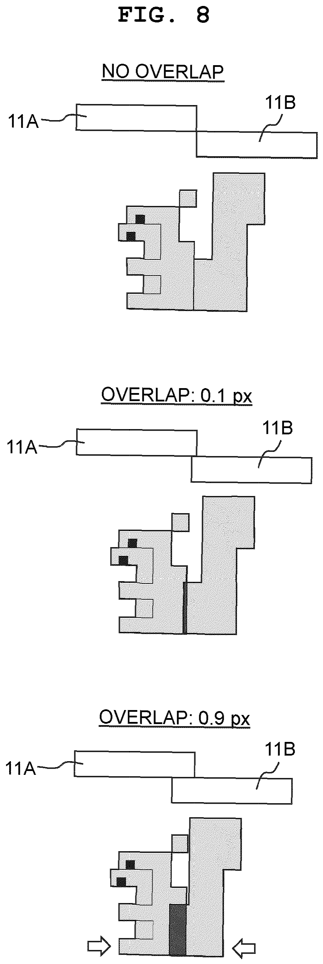

FIG. 8 is a schematic view illustrating an example of images formed in cases where the overlap between the two pixels formed by the two nozzles forming the stitch (the right-end nozzle 42R and the left-end nozzle 42L) in the two adjacent heads 11 are 0 px, 0.1 px, and 0.9 px, respectively. As depicted in FIG. 8, as the overlap between the two pixels formed by the two nozzles forming the stitch becomes greater, the formed image has a size reduced in the left-right direction, which in turn decreases the image quality. Therefore, in the present embodiment, the following adjustment is performed to prevent such an occasion that the image quality is decreased as the overlap between the two pixels formed by the two nozzles forming the stitch (the right-end nozzle 42R and the left-end nozzle 42L) of the two heads 11 becomes greater.

The manufacturer or the user of the printing apparatus 1 prints a test pattern using the printing apparatus 1, and causes a scanner connected to the printing apparatus 1 to read and scan the test pattern. Then, based on the result of the scan, the main controller 7A measures the landing position of the ink ejected from the right-end nozzle 42R of the usable nozzles of the head 11A, and the landing position of the ink ejected from the left-end nozzle 42L of the usable nozzles of the head 11B. Then, based on the measured landing positions, the main controller 7A detects the amount of overlap X1 between the first pixel G1 formed by the right-end nozzle 42R of the head 11A and the second pixel G2 formed by the left-end nozzle 42L of the head 11B. Similarly, based on the result of the scan, the main controller 7A measures the landing position of the ink ejected from the right-end nozzle 42R of the usable nozzles of the head 11B, and the landing position of the ink ejected from the left-end nozzle 42L of the usable nozzles of the head 11C. Then, based on the measured landing positions, the main controller 7A detects the amount of overlap X2 between the third pixel G3 formed by the right-end nozzle 42R of the head 11B and the fourth pixel G4 formed by the left-end nozzle 42L of the head 11C. Note that in the foregoing description, although the three heads 11 have been described as an example, the main controller 7A performs the measurement similarly for all the heads 11 based on the result of the scan, and detects the amount of overlap with respect to the adjacent heads 11. Then, based on the detected amounts of overlap, the main controller 7A determines whether a duplication process is to be executed with respect to which one of the heads 11. The duplication process will be described later. Further, based on the detected amounts of overlap, the main controller 7A determines, regarding the heads 11 for which the duplication process is to be executed, how to set the amount of the ink to be ejected from each of the right-end nozzle 42R and the left-end nozzle 42L forming the stitch. Then, the main controller 7A causes the EEPROM of the main controller 7A or of the head controller 7B to store information on the necessity of the duplication process and the usable nozzles of each of the heads 11, and information on the adjustment of the amount of the ink.

In the above-described case, the amount of overlap X1 is 0.1 px and the amount of overlap X2 is 0.9 px. In a case where the amount of overlap X1 and the amount of overlap X2 are 0.5 px or more, the head controller 7B modifies the pixel data corresponding to each of the left-end nozzle 42L and the right-end nozzle 42R, which form the stitch, so that the left-end nozzle 42L and the right-end nozzle 42R cooperate to form the same pixel. In the following, the head controller 7B modifying the pixel data of each of the two nozzles forming the stitch so that the two nozzles forming the stitch cooperate to form the same pixel is referred to as executing the duplication process.

In the above-described example, the amount of overlap X1 between the first pixel G1 formed by the right-end nozzle 42R of the head 11A and the second pixel G2 formed by the left-end nozzle 42L of the head 11B is 0.1 px. Therefore, with respect to the heads 11A and 11B, the head controller 7B does not modify the pixel data of the right-end nozzle 42R of the head 11A and the pixel data of the left-end nozzle 42L of the head 11B. In other words, the head controller 7B does not execute the duplication process with respect to the heads 11A and 11B. In contrast, the amount of overlap X2 between the third pixel G3 formed by the right-end nozzle 42R of the head 11B and the fourth pixel G4 formed by the left-end nozzle 42L of the head 11C is 0.9 px. In this case, with respect to the heads 11B and 11C, the head controller 7B modifies the pixel data of the right-end nozzle 42R of the head 11B and the pixel data of the left-end nozzle 42L of the head 11C so that these two nozzles form the same pixel. In other words, with respect to the heads 11B and 11C, the head controller 7B executes the duplication process on the pixel data of the left-end nozzle 42L of the head 11C and the pixel data of the right-end nozzle 42R of the head 11B. In this case, with respect to the head 11C, the head controller 7B also changes the pixel data with respect to the remaining usable nozzles of the head 11C (i.e., usable nozzles except the left-end nozzle 42L). As a result, after the duplication process, the head controller 7B changes the pixel data of the usable nozzles in the head 11C, except the left-end nozzle 42L, to be shifted by one nozzle to the right, as compared to the pixel data before the duplication process.

By executing the duplication process so that the left-end nozzle 42L of the head 11C and the right-end nozzle 42R of the head 11B form the same pixel, the occurrence of such a situation that the formed image has a size reduced in the left-right direction, as depicted in the lower portion of FIG. 8 in which the amount of overlap is 0.9 px, is prevented, and the decrease in image quality is prevented.

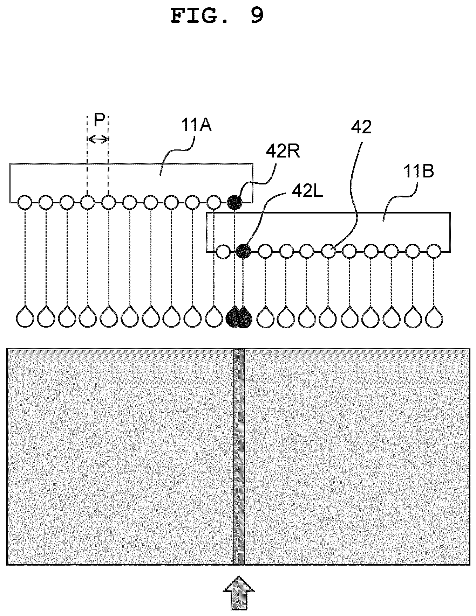

Next, in a case where the duplication process is executed, the adjustment of the ink amount which is executed at the same time as the duplication process will be described. First, a case where the amount of overlap X1 between the first pixel G1 formed by the right-end nozzle 42R of the head 11A and the second pixel G2 formed by the left-end nozzle 42L of the head 11B is 0.5 px will be described. The amount of the ink droplet ejected from the right-end nozzle 42R is assumed to be 100% in the case where the duplication process is not executed. In a case where the ink in an amount corresponding to 100% is ejected from each of the right-end nozzle 42R and the left-end nozzle 42L, the ink in an amount corresponding to 200% consequently lands on an area of 1.5 px in width (see FIG. 9). In this case, as compared to the case where the amount of overlap X 1 is 0 px, the duplication process is not executed and an ink droplet in the amount corresponding to 100% is ejected from the right-end nozzle 42R, the ink density (i.e., the amount of the ink which lands on the area of unit width) becomes great, and a color streak is likely to occur.

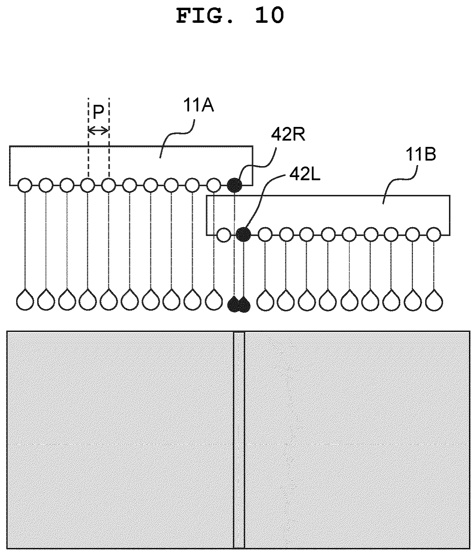

In contrast, a case where the amount of overlap X1 is 0.5 px and where the ink in an amount corresponding to 75% is ejected from each of the right-end nozzle 42R and the left-end nozzle 42L will be described (see FIG. 10). In this case, the ink in an amount corresponding to 150% consequently lands on the area of 1.5 px in width. In this case, since the ink density equivalent to that in a case where the amount of overlap X1 is 0 px can be achieved, the occurrence of the color streaks can be reduced.

Further, for example, a case where the amount of overlap X1 is 0.85 px will be described. In a case where the right-end nozzle 42R and the left-end nozzle 42L each eject the ink in the amount corresponding to 100%, the ink in the amount corresponding to 200% consequently lands on the area of 1.15 px in width, and thus a color streak is likely to occur, for the same reason as described above. To achieve the ink density equivalent to that in the case where the amount of overlap X1 is 0 px, the ink in an amount corresponding to 115% may be ejected to an area of 1.15 px in width. Accordingly, in a case where the amount of overlap X1 is 0.85 px, the amount of the ink ejected from each of the right-end nozzle 42R and the left-end nozzle 42L is made an amount corresponding to 57%, thereby achieving the ink density equivalent to that in the case where the amount of overlap X1 is 0 px. Thus, in the present embodiment, the amount of the ink ejected from each of the right-end nozzle 42 R and left-end nozzle 42L, which form the stitch, is adjusted in accordance with the amount of overlap X1 so that the ink density equivalent to that in a case where the amount of overlap X1 is 0 px can be achieved.

Note that such a procedure is conceivable wherein, for each combination of two heads 11, the head controller 7B determines the size of the ink droplets to be ejected, respectively, from the right-end nozzle 42R and the left-end nozzle 42L in accordance with the amount of overlap X1, to thereby cause the ink droplets of the determined size to be ejected from the right-end nozzle 42R and the left-end nozzle 42L and to reduce the amount of the ink ejected from each of the right-end nozzle 42R and left-end nozzle 42L. For example, in a case where the amount of overlap X1 is 0.5 px as described above, the head controller 7B reduces the size of the ink droplet ejected from each of the right-end nozzle 42R and the left-end nozzle 42L by approximately 25%, as compared with the size of the ink droplet ejected from each of the other nozzles 42 different from the right-end nozzle 42R and the left-end nozzle 42L so that the amount of the ink ejected from each of the right-end nozzle 42R and the left-end nozzle 42L is reduced by approximately 25% and that the ink droplet in an amount corresponding to 75% is ejected from each of the right-end nozzle 42R and the left-end nozzle 42L. Further, in a case where the amount of overlap X1 is 0.85 px, as described above, the head controller 7B reduces the size of the ink droplet ejected from each of the right-end nozzle 42R and the left-end nozzle 42L by approximately 43% as compared with the size of the ink droplet ejected from each of the other nozzles 42 different from the right-end nozzle 42R and the left-end nozzle 42L so that the amount of the ink ejected from each of the right-end nozzle 42R and the left-end nozzle 42L is reduced by approximately 43% and that the ink droplet in an amount corresponding to 57 % is ejected from each of the right-end nozzle 42R and the left-end nozzle 42L. Note, however, that the size of the ink droplet ejected from head 11 is usually limited to several predetermined kinds of sizes. For example, the head 11 of the present embodiment is capable of ejecting three kinds of sizes of ink droplets: small droplet (DS1), middle droplet (DS2), and large droplet (DS3). For example, regarding a certain ink among the white ink, yellow ink, magenta ink, cyan ink, and black ink, the large droplet is 3.2 pl, the middle droplet is 2.8 pl, and the small droplet is 2.0 pl. Causing the right-end nozzle 42R and left-end nozzle 42L, which form the stitch, to eject the size of the ink droplet in accordance with the amount of overlap X1, in addition to the above-described three sizes, is very difficult to achieve for the following reason. Namely, the above-described settings of the size of ink droplets which are the large droplet, middle droplet, and small droplet are not sufficient for the setting of the size of ink droplet, and further more settings of the size of ink droplets need to be prepared in order to eject a plurality of kinds of ink droplets of mutually different sizes in accordance with the amount of overlap X1.

Therefore, in the present embodiment, the head controller 7B adjusts the proportion of the large droplet, middle droplet, small droplet, and non-ejection in a case of forming a dot line by a plurality of dots continuous in the conveying direction, in accordance with the amount of overlap X1, in order to achieve the density of the ink equivalent to that in a case where the overlap X1 is 0 px. For example, the head controller 7B performs a correction so as to make the size of the ink droplet ejected from each of the right-end nozzle 42R and the left-end nozzle 42L smaller than the size of an ink droplet ejected from each of the other usable nozzles 42 by, for example, ejecting the middle or small droplet rather than the large droplet or ejecting the small droplet rather than the middle droplet, thereby reducing the amount of the ink.

Alternatively, the head controller 7B is capable of achieving the density of ink equivalent to that in the case where the amount of overlap X1 is 0 px, by alternately ejecting ink droplets from the right-end nozzle 42R and the left-end nozzle 42L while selectively skipping the number of times the ink droplets is ejected from each of the right-end nozzle 42R and the left-end nozzle 42L. In a case where N pixels continuous in the conveying direction are to be formed, where a number of pixels formed by the right-end nozzle 42R is N1 (N1 > 0), and where a number of pixels formed by the left-end nozzle 42L is N2 (N2 > 0), the ink droplets are ejected alternately from the right-end nozzle 42R and the left-end nozzle 42L so that N1 + N2 = N holds. Note that the ratio between N1 and N2 is preferably 0.3 ≤ N1/(N1+N2) ≤ 0.7, more preferably 0.4 ≤ N1 /(N1+N2) ≤ 0.6, and further more preferably N1/(N1+N2) = 0.5. By performing the setting so that N1/(N1+N2) = 0.5 holds, the density of the ink droplet ejected from the right-end nozzle 42R and the density of the ink droplet ejected from the left-end nozzle 42L can be made the same.

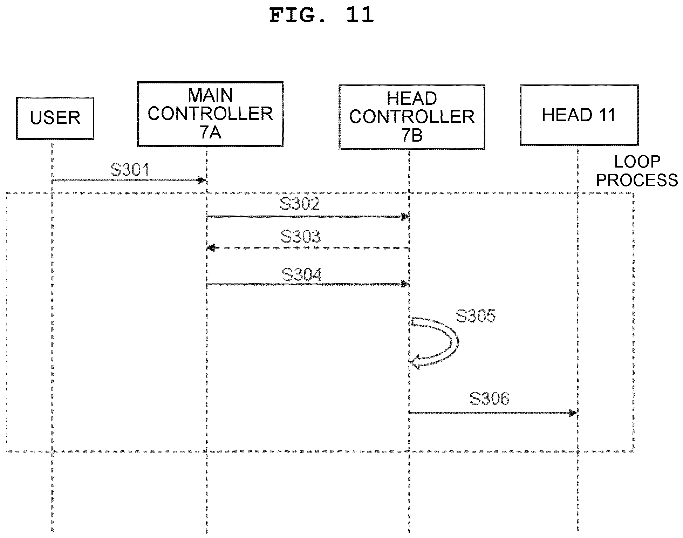

Next, a printing process will be described. As depicted in FIG. 11, in a case where a print starting instruction from the user of the printing apparatus 1 is input to the main controller 7A (step S301), the main controller 7A transmits a print command to each of the head controllers 7B (step S302). Each of the head controllers 7B which receives the print command requests the main controller 7A to transmit print data (step S303), and receives the print data from the main controller 7A (step S304). In a case where each of the head controllers 7B receives the print data from the main controller 7A, each of the head controllers 7B corrects the print data based on the information on the necessity of the duplication process with respect to each of the heads 11 and on the usable nozzles, and the information on the adjustment of ink droplets stored in the EEPROM of the main controller 7A or the EEPROM of each of the head controller 7B (step S305). Then, each of the head controllers 7B transmits the corrected print data to the head 11 (step S306). The printing apparatus 1 repeats the processes from step S302 to step S306 until the printing is completed.

### Matching of Base Colors

In the foregoing, regarding the plurality of heads 11 included in one head bar 10 as an example, the duplication process which is executed for preventing the decrease in image quality has been described. In the following, an adjusting method will be described, which is referred to as base color matching by the inventors of the present application, as an example of the duplication process suitably applicable to two head bars 10 which eject inks of different colors.

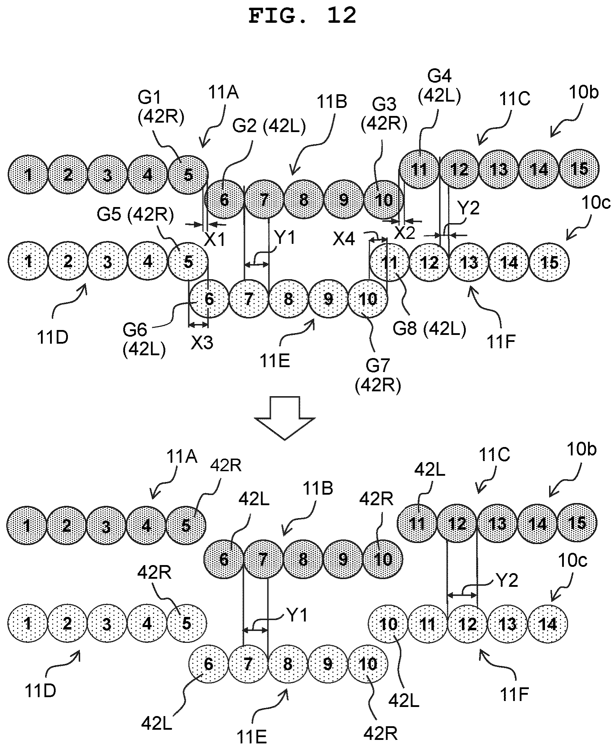

In the following, three heads 11A, 11B and 11C included in the head bar 10b, which ejects the black ink, and three heads 11D, 11E and 11F included in the head bar 10c, which ejects the cyan ink, as depicted in FIG. 12 will be described. The heads 11D, 11E and 11F are three heads 11 adjacent to one another in the left-right direction and disposed at shifted positions from one another in the front-rear direction in the head bar 10c which ejects the cyan ink. Among the three heads 11, one head 11 positioned leftmost is the head 11D, one head 11 positioned to the right of the head 11D is the head 11E, and one head 11 positioned further to the right of the head 11E is the head 11F. Similarly to the heads 11A, 11B and 11C, a right area located at the right end of the nozzle area of the nozzle surface 41b of the head 11D and a left area located at the left end of the nozzle area of the nozzle surface 41b of the head 11E overlap each other in the left-right direction, and a right area located at the right end of the nozzle area of the nozzle surface 41b of the head 11E and a left area located at the left end of the nozzle area of the nozzle surface 41b of the head 11F overlap each other in the left-right direction. Although the shapes of the heads 11A to 11F are not directly illustrated in FIG. 12, similarly to FIG. 7, the positional relationship between the nozzles 42 and the head 11 corresponding to the nozzles 42 is illustrated by the positional relationship of pixels formed, respectively, by the ink droplets ejected from the nozzles 42. Here, the usable nozzles of the head 11A overlap the usable nozzles of the head 11D in the conveying direction. Similarly, the usable nozzles of the head 11B overlap the usable nozzles of the head 11E in the conveying direction, and the usable nozzles of the head 11C overlap the usable nozzles of the head 11F in the conveying direction. Furthermore, a nozzle at the left end of the usable nozzles (hereinafter referred to as a "left-end nozzle 42L") of the head 11B is determined so that the amount of overlap X1 between a first pixel G1 formed by the ink ejected from the right-end nozzle 42R of the head 11A and a second pixel G2 formed by the ink ejected from the left-end nozzle 42L of the head 11B is greater than 0 (zero) and smaller than the width of one pixel (1 px) (see FIG. 12). The foregoing is similarly applicable also to the heads 11B and 11C, the heads 11D and 11E, and the heads 11E and 11F. Note that in the example depicted in FIG. 12, the amount of overlap X1 between the first pixel G1 formed by the ink ejected from the right-end nozzle 42R of the head 11A and the second pixel G2 formed by the ink ejected from the left-end nozzle 42L of the head 11B is 0.1 px. Further, the amount of overlap X2 between the third pixel G3 formed by the ink ejected from the right-end nozzle 42R of the head 11B and the fourth pixel G4 formed by the ink ejected from the left-end nozzle 42L of the head 11C is 0.1 px. In contrast, an amount of overlap X3 between a fifth pixel G5 formed by the ink ejected from the right-end nozzle 42R of the head 11D and a sixth pixel G6 formed by the ink ejected from the left-end nozzle 42L of the head 11E is 0.5 px. Furthermore, an amount of overlap X4 between a seventh pixel G7 formed by the ink ejected from the right-end nozzle 42R of the head 11E and an eighth pixel G8 formed by the ink ejected from the left-end nozzle 42L of the head 11F is 0.5 px.

First, the manufacturer or the user of the printing apparatus 1 prints a test pattern with respect to the three heads 11A, 11B and 11C included in the head bar 10b which ejects the black ink, and causes the scanner connected to the printing apparatus 1 to read and scan the test pattern. Then, based on the result of the scan, the main controller 7A measures the amount of overlap between the two pixels formed by the right-end nozzle 42R and the left-end nozzle 42L forming the stitch, with respect to the three heads 11A, 11B and 11C, and the main controller 7A identifies a pair of heads 11 between which the amount of overlap is 0.5 px or more. Further, with respect to the pair of the heads 11 between which the amount of overlap is 0.5 or more, the above-described duplication process is executed.

Note that in the example depicted in FIG. 12, the amount of overlap X1 between the head 11A and the head 11B is 0.1 px, and the amount of overlap X2 between the head 11B and the head 11C is 0.1 px. Therefore, the duplication process is not executed with respect to the pair of the head 11A and the head 11B, and with respect to the pair of the head 11B and the head 11C. Also note that in a case where the duplication process is executed in the head bar 10b, which ejects the black ink, the test pattern is newly printed and the scan is performed again.

Next, based on the result of the scan of the test pattern, the main controller 7A measures an amount of overlap between a pixel formed by a head 11 included in the head bar 10B which ejects the black ink and a pixel formed by a head 11 included in the head bar 10c which ejects the cyan ink. For example, in the example depicted in FIG. 12, the main controller 7A measures, regarding the head 11B and the head 11E, an amount of overlap Y1 between a pixel formed by an ink droplet ejected from a nozzle 42 second from the left (a pixel seventh from the left in FIG. 12) of the head 11B and a pixel formed by an ink droplet ejected from a nozzle 42 second from the left (a pixel seventh from the left in FIG. 12) of the head 11E; the main controller 7A measures, regarding the head 11C and the head 11F, an amount of overlap Y2 between a pixel formed by an ink droplet ejected from a nozzle 42 second from the left (a pixel twelfth from the left in FIG. 12) of the head 11C and a pixel formed by an ink droplet ejected from a nozzle 42 second from the left (a pixel twelfth from the left in FIG. 12) of the head 11F. In the example depicted in FIG. 12, the amount of overlap Y1 is 0.8 px and the amount of overlap Y2 is 0.2 px.

Two heads 11 which overlap in the conveying direction (e.g. the head 11A and the head 11D) are ideally positioned so that, in the left-right direction, a nozzle Nth from the left of one of the two heads 11 and a nozzle Nth from the left of the other of the two heads 11 are located at the same relative positions. Namely, two pixels formed, respectively, by the nozzles which are Nth from the left of the two heads 11 overlapping in the conveying direction are ideally located at the same relative positions (so that the amount of overlap between the two pixels is 1 px). However, due to the mounting errors in the head bar 10, the nozzles Nth from the left of the two heads are not at the same relative positions in many cases, which in turn leads to the amount of overlap of less than 1 px in many cases. In particular, as the amount of overlap approaches 0 (zero), the farther apart the Nth nozzles are from each other. Therefore, in a case where the Nth nozzles are apart from each other, for example, in a case where the amount of overlap is less than 0.5 px, the duplication process is executed.

In the example depicted in FIG. 12, in a case where the amount of overlap Y1 or Y2 is less than 0.5 px, the head controller 7B of the head bar 10c which ejects the cyan ink corrects the pixel data corresponding to each of the left-end nozzle 42L and the right-end nozzle 42R which form the stitch, so that the left-end nozzle 42L and the right-end nozzle 42R cooperate to form the same pixel. In the above-described example, the head controller 7B of the head bar 10c executes, in the pair of the head 11E and the head 11F, the duplication process with respect to the pixel data corresponding to each of the left-end nozzle 42L and the right-end nozzle 42R which form the stitch. As a result, in the example depicted in FIG. 12, the amount of overlap Y2 between the pixels twelfth from the left, respectively, of the head 11E and the head 11F is improved from 0.2 px to 0.8 px.

As described above, in the matching of base colors, the misalignment between the head 11 in the head bar 10 which ejects the base color ink (e.g., black ink) and the head 11 in the head bar 10 which ejects another color ink (e.g., cyan ink) is detected. In a case where the misalignment is great (e.g., in a case where the amount of overlap between the pixels is less than 0.5 px), with respect to the head 11 included in the head bar 10 which ejects the another color ink, the duplication process is executed with respect to the right-end nozzle 42R and the left-end nozzle 42L forming the stitch. With this, the decrease in image quality due to the misalignment between the head 11 included in the head bar 10 which ejects the base color ink and the head 11 included in the head bar 10 which ejects the another color ink can be prevented.

### Max-Min Algorithm

Next, as an example of the duplication process which is suitably applicable to three or more head bars 10 ejecting inks of different colors, an adjusting method, which the inventors refer to as the max-min algorithm, will be described.

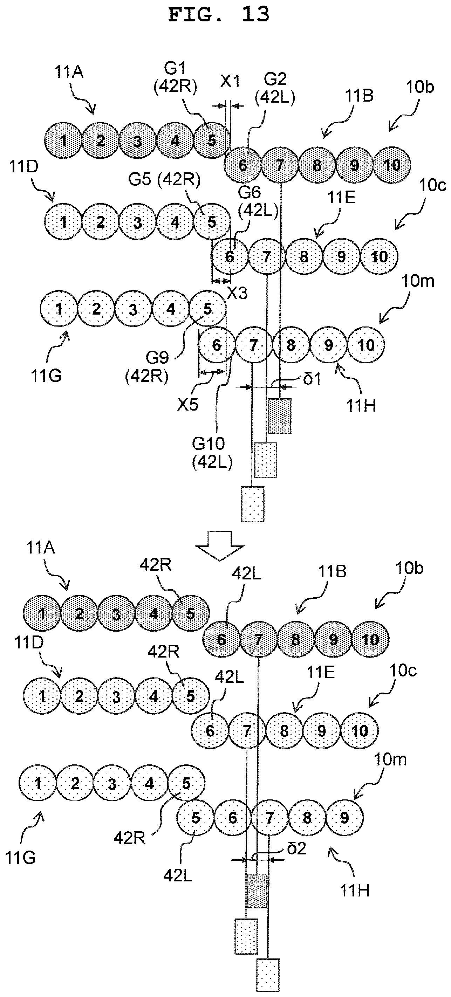

Two heads 11A and 11B included in a head bar 10b which ejects the black ink, two heads 11D and 11E included in a head bar 10c which ejects the cyan ink, and two heads 11G and 11H included in a head bar 10m which ejects the magenta ink, as depicted in FIG. 13, will be described. The heads 11G and 11H are two heads 11 adjacent to each other in the left-right direction and disposed at shifted positions from each other in the front-rear direction in the head bar 10c which ejects the magenta ink. Between the two heads 11, one head 11 positioned on the left side is the head 11G, and the other head 11 positioned to the right of the head 11G is the head 11H. Similarly to the heads 11A and 11B, and the heads 11D and 11E, a right area located at the right end of the nozzle area of the nozzle surface 41b of the head 11G and a left area located at the left end of the nozzle area of the nozzle surface 41b of the head 11H overlap each other in the left-right direction. Although the shapes of the heads 11A to 11H are not directly illustrated in FIG. 13, similarly to FIG. 7, the positional relationship between the nozzles 42 and the head 11 corresponding to the nozzles 42 is illustrated by the positional relationship of pixels formed, respectively, by the ink droplets ejected from the nozzles 42. Here, the usable nozzles of the head 11A overlap the usable nozzles of the head 11D and the usable nozzles of the head 11G in the conveying direction. Similarly, the usable nozzles of the head 11B overlap the usable nozzles of the head 11E and the usable nozzles of the head 11H in the conveying direction. Furthermore, a nozzle at the left end of the usable nozzles (hereinafter referred to as a "left-end nozzle 42L") of the head 11B is determined so that an amount of overlap X1 between a first pixel G1 formed by the ink ejected from the right-end nozzle 42R of the head 11A and a second pixel G2 formed by the ink ejected from the left-end nozzle 42L of the head 11B is greater than 0 (zero) and smaller than the width of one pixel (1 px) (see FIG. 13). Similarly, with respect to the head 11D and the head 11E, a nozzle at the left end of the usable nozzles (hereinafter referred to as a "left-end nozzle 42L") of the head 11E is determined so that an amount of overlap X3 between a fifth pixel G5 formed by the ink ejected from the right-end nozzle 42R of the head 11D and a sixth pixel G6 formed by the ink ejected from the left-end nozzle 42L of the head 11E is greater than 0 (zero) and smaller than the width of one pixel (1 px). With respect to the head 11G and the head 11H, a nozzle at the left end of the usable nozzles (hereinafter referred to as a "left-end nozzle 42L") of the head 11H is determined so that an amount of overlap X5 between a nineth pixel G9 formed by the ink ejected from the right-end nozzle 42R of the head 11G and a tenth pixel G10 formed by the ink ejected from the left-end nozzle 42L of the head 11H is greater than 0 (zero) and smaller than the width of one pixel (1 px).

First, the manufacturer or the user of the printing apparatus 1 prints a test pattern and causes the scanner connected to the printing apparatus 1 to read and scan the test pattern. Then, based on the result of the scan of the test pattern, the main controller 7A measures the position of a pixel formed by a head 11 included in the head bar 10b which ejects the black ink, the position of a pixel formed by a head 11 included in the head bar 10c which ejects the cyan ink, and the position of a pixel formed by a head 11 included in the head bar 10m which ejects the magenta ink. Further, the main controller 7A measures a distance δ1 between two pixels which are most distant among the above-described three pixels. For example, in the example depicted in FIG. 13, the main controller 7A measures, regarding the head 11B, the head 11E and the head 11H, the positions of pixels each of which is formed by the ink droplet ejected from a nozzle 42 second from the left in a corresponding one of the heads 11B, 11E and 11H (pixels seventh from the left in FIG. 13). Then, the main controller 7A measures the distance δ1 between the pixel of the magenta ink located leftmost among the pixels seventh from the left and the pixel of the black ink located rightmost among the pixels seventh from the left in FIG. 13.

Next, the duplication process is executed with respect to the head bar 10 corresponding to the pixel located leftmost. In the example depicted in FIG. 13, the duplication process is executed with respect to the heads 11G and 11H included in the head bar 10m which ejects the magenta ink. Then, the manufacturer or the user of the printing apparatus 1 prints the test pattern again, and causes the scanner connected to the printing apparatus 1 to read and scan the test pattern. Then, based on the result of the scan of the test pattern, the main controller 7A measures the positions of pixels each of which is formed by a corresponding one of the heads 11A and 11B included in the head bar 10b which ejects the black ink, the positions of pixels each of which is formed by a corresponding one of the heads 11D and 11E included in the head bar 10c which ejects the cyan ink, and the positions of pixels each of which is formed by a corresponding one of the heads 11G and 11H included in the head bar 10m which ejects the magenta ink, again. Further, the main controller 7A measures a distance δ2 between two pixels which are most distant among the above-described pixels. The main controller 7A compares the distance δ1 previously measured and the distance δ2 measured this time. In a case where δ1 ≤ δ2 holds, the main controller 7A determines that the duplication process previously executed has not been effective, cancels the duplication process previously execute and restores the state to the original state. On the other hand, in a case where δ1 > δ2 holds, the main controller 7A determines that the duplication process previously executed has been effective. Further, the main controller 7A determines whether to execute the duplication process further, by the following procedure. First, the duplication process is executed with respect to the head bar 10 corresponding to the pixel located leftmost. In the example depicted in FIG. 13, the duplication process is executed with respect to the heads 11D and 11E included in the head bar 10c which ejects the cyan ink. Then, the manufacturer or the user of the printing apparatus 1 prints the test pattern again, and causes the scanner connected to the printing apparatus 1 to read and scan the test pattern. Then, based on the result of the scan of the test pattern, the main controller 7A measures the distance between two pixels which are most distant among the above-described pixels. Further, the main controller 7A compares the distance between the two pixels measured previously with the distance between the two pixels measured this time, and determines whether the duplication process executed previously has been effective. The main controller 7A repeats such a process until the main controller 7A determines that the duplication process executed previously has not been effective.

By executing such a process, color shift between the head bars 10 in the three or more head bars 10 which eject the inks of different colors can be prevented, thereby preventing the decrease in image quality.

In the above-described embodiment, each of the head bars 10 of the printing apparatus 1 has the head 11A and the head 11B disposed at the separate positions in the conveying direction. Further, the printing apparatus 1 has the conveying rollers 5A and 5B configured to convey the recording medium 4 from the upstream side toward the downstream side in the conveying direction. The head 11A is positioned upstream of the head 11B in the conveying direction. The heads 11A and 11B each have the nozzle area in which the plurality of nozzles 42 are aligned at the pitch P along the left-right direction. The right end part of the nozzle area of the head 11A and the left end part of the nozzle area of the head 11B overlap in the left-right direction. The usable nozzles of the head 11A include the right-end nozzle 42R located at the right end of the left-right direction and the plurality of nozzles 42 other than the right-end nozzle 42R. The usable nozzles of the head 11B include the left-end nozzle 42L located at the left end and the plurality of nozzles 42 other than the left-end nozzle 42L. The amount of overlap X1 between the first pixel G1 formed by the ink droplet ejected from the right-end nozzle 42R of the head 11A and the second pixel G2 formed by the ink droplet ejected from the left-end nozzle 42L of the head 11B is less than one pixel (0 px < X1 < 1 px). The printing is performed by repeatedly ejecting ink droplets from the usable nozzles of the head 11A and the usable nozzles of the head 11B based on the pixel data while conveying the recording medium 4 in the conveying direction. In a case where the pixel data for forming the pixel group by the ink droplets ejected from the usable nozzles of the head 11A, and the pixel data for forming the pixel group by the ink droplets ejected from the usable nozzles of the head 11B are different, the printing method further includes executing the duplication process of making the pixel data for forming the first pixel G1 and the pixel data for forming the second pixel G2 the same.

By executing the duplication process so that the left-end nozzle 42L of the head 11B and the right-end nozzle 42R of the head 11A form the same pixel, the occurrence of such a situation that the formed image has a size reduced in the left-right direction is prevented, and thus the decrease in image quality is prevented.

In the above-described embodiment, in a case where the amount of overlap X1 is 0.5 pixels or more and less than one pixel (0.5 px ≤ X1 < 1 px), the process for making the pixel data for forming the first pixel G1 and the pixel data for forming the second pixel G2 the same. In a case where the amount of overlap X1 is 0.5 pixels or more and less than one pixel, the decrease in image quality is greater than in a case where the amount of overlap X1 is less than 0.5 pixel. In such a case, the reduction in size of the formed image in the left-right direction is prevented and the decrease in image quality is prevented.

The embodiment disclosed herein is an example in all senses, and should be interpreted as non-restrictive or non-limiting in any way. All of the configurations described in the above-described embodiment are not necessarily indispensable, and the configurations can be changed or omitted as necessary.

In the above-described embodiment, the number of head bars 10 is four. However, the present disclosure is not limited to such an aspect, and the number and the position of head bars 10 may be changed as appropriate. Similarly, the number and the position of the heads 11 included in one head group 20 may be changed as appropriate. Further, the number and the position of the nozzles 42 included in each of the heads 11 may also be changed as appropriate.

In the above-described embodiment, the recording medium wound in the roll shape (for example, the roll sheet) is used as the recording medium 4. The present disclosure, however, is not limited to such an aspect; a recording medium 4 having an appropriate shape and made of an appropriate material may be used, as necessary. The printing apparatus 1 of the above-described embodiment includes the four head bars 10 and is configured to eject the inks of four colors which are the cyan ink, the magenta ink, the yellow ink and the black ink. The present disclosure is not limited to such an aspect; the printing apparatus 1 may be configured to eject an ink of an appropriate color. Further, in the present embodiment, the UV-curable ink is used. The present disclosure, however, is not limited to such an aspect; an ink different from the UV-curable ink (for example, a water-based ink, a pigment ink, etc.) may also be used.

Furthermore, the present disclosure is not necessarily limited to the head bar including the line head, the present disclosure is widely applicable to a head bar including a plurality of heads. Moreover, the present disclosure is not limited to the printing apparatus of the ink-jet system which is configured to eject an ink. Further, the present disclosure is also applicable to a printing apparatus which is usable in a variety of kinds of usage or application other than printing an image, etc. For example, the present disclosure is also applicable to a printing apparatus configured to form a conductive pattern on a surface of a substrate by ejecting a conductive liquid onto the substrate. The scope of the present disclosure is intended to encompass all the changes within the scope of the claims and a scope equivalent to the scope of the claims.

### Reference Signs List:.

1: printing apparatus, 10: head bar, 11: head, 42: nozzle, 42L: left-end nozzle, 42R: right-end nozzle

## Claims

1. A printing method for a printing apparatus,
the printing apparatus including:
a first head bar having a first head and a second head disposed apart from each other in a first direction; and
a conveyor configured to convey a recording medium in the first direction from upstream to downstream;
the first head being located upstream of the second head in the first direction,
each of the first head and the second head having a nozzle area in which a plurality of nozzles are aligned at a pitch P along a second direction orthogonal to the first direction, and an end part on one side in the second direction of the nozzle area of the first head and an end part on the other side in the second direction of the nozzle area of the second head overlapping in the second direction,
a plurality of usable nozzles, of the plurality of nozzles of the first head, including a first nozzle located at the end part on the one side in the second direction and a plurality of first usable nozzles other than the first nozzle,
a plurality of usable nozzles, of the plurality of nozzles of the second head, including a second nozzle located at the end part on the other side in the second direction and a plurality of second usable nozzles other than the second nozzle, and
an amount of overlap X between a first pixel formed by a liquid droplet ejected from the first nozzle and a second pixel formed by a liquid droplet ejected from the second nozzle being greater than 0 pixels and less than one pixel,
the printing method comprising:
performing printing by repeatedly causing each of the first head and the second head to eject liquid droplets from the plurality of usable nozzles, based on pixel data, while causing the conveyor to convey the recording medium along the first direction; and
making pixel data for forming the first pixel same as pixel data for forming the second pixel.

2. The printing method according to claim 1, wherein in a case where the amount of overlap X is 0.5 pixels or more and less than one pixel, the pixel data for forming the first pixel is made same as the pixel data for forming the second pixel.

3. The printing method according to claim 1 or 2, wherein the printing apparatus further includes a second head bar having a third head and a fourth head disposed apart from each other in the first direction, the second head bar being disposed apart from the first head bar in the first direction,
the third head is located upstream of the fourth head in the first direction,
each of the third head and the fourth head has a nozzle area in which a plurality of nozzles are aligned at the pitch P along the second direction,
an end part on the one side in the second direction of the nozzle area of the third head and an end part on the other side in the second direction of the nozzle area of the fourth head overlap in the second direction,
the nozzle area of the first head and the nozzle area of the third head overlap in the second direction,
the nozzle area of the second head and the nozzle area of the fourth head overlap in the second direction,
a plurality of usable nozzles, of the plurality of nozzles of the third head, includes a third nozzle located at the end part on the one side in the second direction and a plurality of third usable nozzles other than the third nozzle; and
a plurality of usable nozzles, of the plurality of nozzles of the fourth head, includes a fourth nozzle located at the end part on the other side in the second direction and a plurality of fourth usable nozzles other than the fourth nozzle,
the printing method comprising:
in a case where an amount of overlap Y between a first reference pixel formed by a liquid droplet ejected from one second usable nozzle among the plurality of second usable nozzles and a second reference pixel formed by a liquid droplet ejected from one fourth usable nozzle among the plurality of fourth usable nozzles is greater than 0 pixels and less than 0.5 pixels,
making the pixel data for forming the first pixel same as the pixel data for forming the second pixel.

4. The printing method according to claim 1 or 2, wherein the printing apparatus further includes:
a second head bar having a third head and a fourth head disposed apart from each other in the first direction, the second head bar being disposed at a position apart from the first head bar in the first direction,
a third head bar having a fifth head and a sixth head disposed apart from each other in the first direction, the third head bar being disposed at a position apart from the first head bar and the second head bar in the first direction;
the third head is located upstream of the fourth head in the first direction, and the fifth head is located upstream of the sixth head in the first direction;
each of the third head and the fourth head has a nozzle area in which a plurality of nozzles are aligned at the pitch P along the second direction,
an end part on the one side in the second direction of the nozzle area of the third head and an end part on the other side in the second direction of the nozzle area of the fourth head overlap in the second direction,
each of the fifth head and the sixth head has a nozzle area in which a plurality of nozzles are aligned at the pitch P along the second direction,
an end part on the one side in the second direction of the nozzle area of the fifth head and an end part on the other side in the second direction of the nozzle area of the sixth head overlap in the second direction,
the nozzle area of the first head, the nozzle area of the third head and the nozzle area of the fifth head overlap in the second direction,
the nozzle area of the second head, the nozzle area of the fourth head and the nozzle area of the sixth head overlap in the second direction,
a plurality of usable nozzles, of the plurality of nozzles of the third head, includes a third nozzle located at the end part on the one side in the second direction and a plurality of third usable nozzles other than the third nozzle,
a plurality of usable nozzles, of the plurality of nozzles of the fourth head, includes a fourth nozzle located at the end part on the other side in the second direction and a plurality of fourth usable nozzles other than the fourth nozzle,
a plurality of usable nozzles, of the plurality of nozzles of the fifth head, includes a fifth nozzle located at the end part on the one side in the second direction and a plurality of fifth usable nozzles other than the fifth nozzle,
a plurality of usable nozzles, of the plurality of nozzles of the sixth head, includes a sixth nozzle located at the end part on the other side in the second direction and a plurality of sixth usable nozzles other than the sixth nozzle, and
a first reference pixel formed by a liquid droplet ejected from one second usable nozzle among the plurality of second usable nozzles, a second reference pixel formed by a liquid droplet ejected from one fourth usable nozzle among the plurality of fourth usable nozzles and corresponding to the first reference pixel, and a third reference pixel formed by a liquid droplet ejected from one sixth usable nozzle among the plurality of sixth usable nozzles and corresponding to the first reference pixel are disposed in order from the other side toward the one side in the second direction,
the printing method further comprising:
in a case where an extent of misalignment in the second direction among the first reference pixel, the second reference pixel and the third reference pixel is short in a case where the pixel data for forming the first pixel is made same as the pixel data for forming the second pixel,
making the pixel data for forming the first pixel same as the pixel data for forming the second pixel.

5. The printing method according to any one of claims 1 to 4, further comprising adjusting an amount of the liquid droplet ejected from the first nozzle and an amount of the liquid droplet ejected from the second nozzle so that average density of a plurality of pixels each of which is formed by the liquid droplet ejected from the first nozzle and average density of a plurality of pixels each of which is formed by the liquid droplet ejected from the second nozzle have a predetermined value.

6. The printing method according to claim 5, wherein the adjusting the amount of the liquid droplet ejected from the first nozzle and the amount of the liquid droplet ejected from the second nozzle includes:
reducing a size of the liquid droplet ejected from the first nozzle to be smaller than a size of a liquid droplet ejected from each of the plurality of first usable nozzles; and
reducing a size of the liquid droplet ejected from the second nozzle to be smaller than a size of a liquid droplet ejected from each of the plurality of second usable nozzles.

7. The printing method according to claim 5 or 6, wherein the adjusting the amount of the liquid droplet ejected from the first nozzle and the amount of the liquid droplet ejected from the second nozzle includes:
selectively skipping the number of times the liquid droplet is ejected from the first nozzle; and
selectively skipping the number of times the liquid droplet is ejected from the second nozzle.

8. The printing method according to any of claims 5 to 7, further comprising adjusting the amount of the liquid droplet ejected from the first nozzle and the amount of the liquid droplet ejected from the second nozzle so that the average density of the plurality of pixels each of which is formed by the liquid droplet ejected from the first nozzle is same as the average density of the plurality of pixels each of which is formed by the liquid droplet ejected from the second nozzle.

9. The printing method according to any of claims 1 to 8, wherein the first head does not have a nozzle located on the one side in the second direction relative to the first nozzle, and the second head has a nozzle located on the other side in the first direction relative to the second nozzle.

10. The printing method according to any of claims 1 to 9, wherein in a pixel group formed by liquid droplets ejected from the plurality of usable nozzles of the first head and a pixel group formed by liquid droplets ejected from the plurality of usable nozzles of the second head, the amount of overlap X is greater than 0 between the first pixel and the second pixel.

11. A printing system comprising:
a head bar having a first head and a second head disposed at positions, respectively, shifted from each other in a first direction;
a conveyor configured to convey a recording medium from an upstream side toward a downstream side in the first direction; and
a controller configured to control the head bar and the conveyor, wherein:
the first head is located upstream of the second head in the first direction,
each of the first head and the second head has a nozzle area in which a plurality of nozzles are aligned at a pitch P along a second direction orthogonal to the first direction, an end part on one side in the second direction of the nozzle area of the first head and an end part on the other side in the second direction of the nozzle area of the second head overlapping in the second direction,
a plurality of usable nozzles, of the plurality of nozzles of the first head, includes a first nozzle located at the end part on the one side in the second direction and a plurality of first usable nozzles other than the first nozzle,
a plurality of usable nozzles, of the plurality of nozzles of the second head, includes a second nozzle located at the end part on the other side in the second direction and a plurality of second usable nozzles other than the second nozzle,
an amount of overlap X1 between a first pixel formed by a liquid droplet ejected from the first nozzle and a second pixel formed by a liquid droplet ejected from the second nozzle is greater than 0 pixels and less than one pixel,
the controller is configured to perform printing by causing the head bar to repeatedly ejecting liquid droplets from each of the plurality of usable nozzles of the first head and the plurality of usable nozzles of the second head, based on pixel data, while causing the conveyor to convey the recording medium along the first direction; and
in a case where pixel data for forming a pixel group by liquid droplets ejected from the plurality of first usable nozzles of the first head is different from pixel data for forming a pixel group by liquid droplets ejected from the plurality of second usable nozzles of the second head, the controller is further configured to make the pixel data for forming the first pixel same as the pixel data for forming the second pixel.
